# EUROPEAN PATENT APPLICATION

(11) **EP 0 856 421 A1**
(43) Date of publication of application: **05.08.1998**
(21) Application number: 98100368.4
(22) Date of filing: 12.01.1998
(51) Int. Cl.: B44B 7/00, B44C 1/22, B23K 26/06

(54) **Method for the machining of buttons and other similar round objects by laser, operating radially in a hemisphere, device therefor, and products produced thereby**

(30) Priority: 30.01.1997 IT BG970003
(71) Applicant: DS4 S.r.l., 24029 Vertova (Bergamo) (IT)
(72) Inventor: Rinaldi, Attilio, 25030 Adro (Brescia) (IT); Guerini, Giuseppe, 24025 Gazzaniga (Bergamo) (IT); Guerini, Andrea, 24020 Parre (Bergamo) (IT); Petrogalli, Angelo, 24023 Clusone (Bergamo) (IT)
(74) Representative: Luksch, Giorgio, Dr.-Ing.

(57) **Abstract**

This method for the ornamental machining and/or marking of buttons and other similar round objects by laser incorporates the special feature that the button (9) is struck by a laser beam (2), e.g. from a CO₂ laser, having the infinite operating directions of the radii of a hemisphere (10) in order to be able to strike both a front surface and the circular rim of the button being machined, the said operational possibility resulting from the use of the direct directions of the laser source and also the indirect directions created by a reflection of the beam from an annular mirror (6) external to and concentric with the button having an essentially frustoconical reflective surface forming an angle of approximately 45° relative to an axis (4) perpendicular to the plane of the button.

## Description

This invention relates to a method for the machining of buttons and other similar round objects by laser, operating radially in a hemisphere, to the device for implementing the method, and to the products produced therewith.

As is known, buttons for clothes are an important aesthetic complement; for this reason there are continual efforts to find new ornamental forms of expression that can be applied to buttons.

Recently the laser has come into use as one such means of enhancing the appearance of buttons and other similar round objects: its light, reflected by rapidly orientable galvanometric mirrors controlled by computer following special machining programs, is capable of marking or etching buttons in countless aesthetic designs.

However, in these familiar means the laser marking action that is employed is direct, and therefore limited to the intrinsic range of angles offered by galvanometric mirrors.

For these reasons the laser apparatuses employed for these aesthetic operations on buttons operate either on their large visible flat surface only, or on their circular rim only.

They do not therefore enable the laser beam to strike with advantage both the rim and the plane of the button.

Moreover, those apparatuses that operate on the rim do so by using equipment that rotates the button in steps in order to expose highly limited arcs of the circle to the marking action of the laser. Such machines also have very long operating times when they require angular rotation of the button or object.

It is an object of the present invention to define a method for the machining of buttons and other similar round objects, such as knobs and handles, by laser, which is capable of marking them from all the radial directions of a sphere, in order to strike their lateral circular part, their flat frontal part, and their intermediate or edge parts.

Another object of the present invention is to define a method capable of being operated for long periods without the deterioration connected to the typical production of smoke by the burns produced by the laser.

Another object is to define a method capable of being operated in conjunction with server carousels supporting the button, which carousels are simply rotatable and have conventional station indexing.

Another object is to define a device suitable for carrying out the abovementioned method.

Another object is to define buttons or similar round objects having aesthetic features derivable from laser action effected along the radii of a frontal hemisphere.

These and other objects will be seen to have been achieved upon examination of the following detailed description of a method for the ornamental machining and/or marking of buttons and other similar round objects by laser, having the special feature that the button is struck by a laser beam e.g. from a CO₂ laser, having the infinite operating directions of the radii of a hemisphere, in order to be able to strike both a front surface and the circular rim of the button being machined, the said operational possibility resulting from the use of the direct directions of the laser source and also the indirect directions created by reflection of the laser beam from a specular ring external to and concentric with the button, with a frustoconical reflective surface forming an angle of approximately 45° relative to the axis perpendicular to the plane of the button.

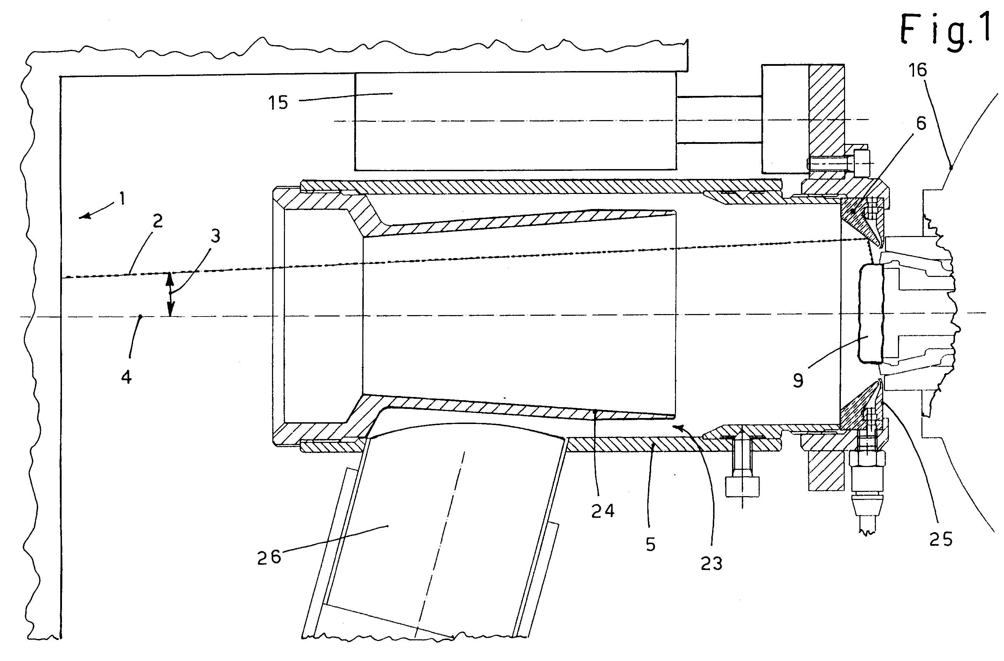

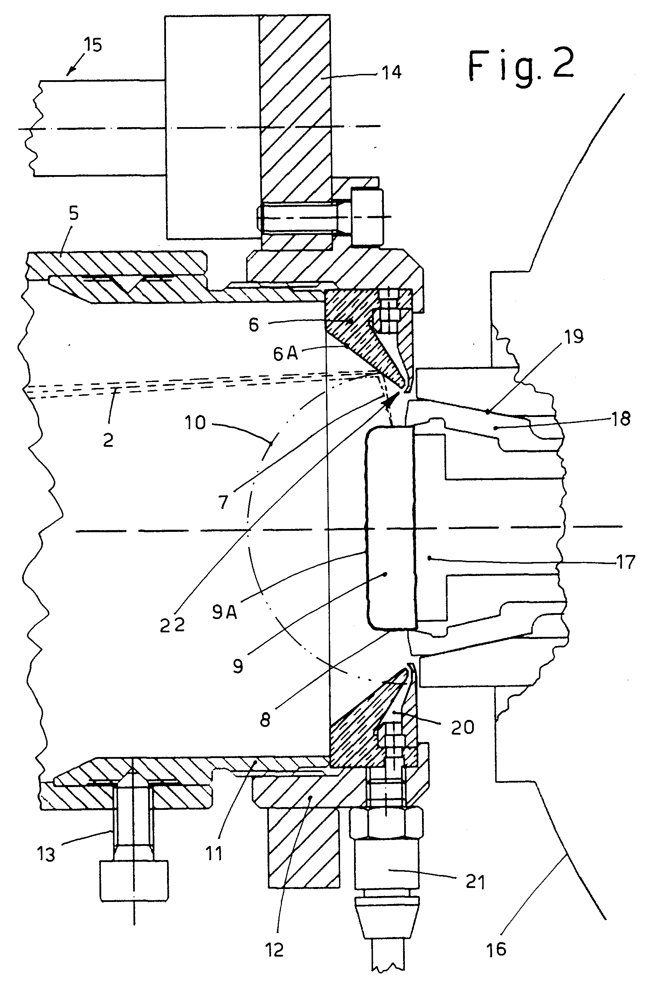

The invention is illustrated, purely by way of non-restrictive example, in the appended Figures 1 and 2, in which it appears in diametric cross-section; Figure 2 is an enlargement of a detail of Fig. 1.

With reference to the abovementioned figures, a laser source apparatus 1 of the type usually used for machining buttons and other similar round objects (e.g. a carbon dioxide laser) emits a laser beam 2 whose angle 3, relative to a central axis 4 of longitudinal reference, is made variable by ordinary galvanometric mirrors controlled by electronic programs.

This laser beam can therefore operate with the angles 3 contained within a certain cone whose vertex is inside the source apparatus 1.

The said cone within which the laser beam can move is passed through a tube 5 of which one end supports a mirror 6 for reflecting this laser beam by a known method. The mirror is annular and has a conical surface 6A in its hole, forming an angle of approximately 45° relative to the axis 4 (Fig. 2).

Consequently the mirror can deflect the laser beams that strike it, causing them to follow directions 7 which may even be perpendicular to cylindrical or curved directrices 8 of the rims of buttons 9.

The angles 7 relate to the entire circumference of the mirror 6 and could incorporate a complete range of variations depending partly on the specific angle of its reflective surface 6A and partly on the position of the surface struck by the laser beam 2.

These angles may therefore have the infinite orientations of radii 7 of an imaginary hemisphere 10 whose diametral plane is perpendicular to the central axis 4. Of these active radii, those most nearly perpendicular to the plane 9A of the button come directly from the laser source 1, while those most nearly parallel to the plane (i.e. perpendicular to the rim) are produced by reflection from the surface 6A of the mirror.

The mirror 6 is interchangeable with other similar mirrors specific to the type of button 9 that is being machined, both in terms of its size and in terms of its spatial form.

The point of contact of the laser beam with the surface of the button must be a focal point in order to give the maximum concentration of its heat energy. It is important therefore that the mirror should focus it as accurately as possible on the surface of the button being machined.

Fig. 2 illustrates clearly a conventional mechanical method of providing the abovementioned interchangeability of the mirror 6 with another mirror more suitable for a different machining action. As can be seen, the mirror is gripped in a sleeve 11 screwed into a support 12, and access to the mirror requires first removing the tube 5 by unscrewing a screw 13.

The support 12 is in turn supported by a mounting 14 which connects it to means capable of moving it along the axis 4; an example of such means is a pneumatic cylinder 15. The purpose of these means is to enable the mirror 6 to be drawn back along its supporting structure, in order to allow a service turntable 16 to rotate on its own axis and serve the various processing stations of the cycle, without interference or contact between the button or other similar round object 9, which it is holding, and the abovementioned supporting structure 12.

The button or other similar round object 9 is held against a contact head 17 by conventional jaws 18, their gripping action being produced by the axial sliding of their backs in a conical sleeve 19.

Very little force is required for their action, because the button is only subject to the force of its weight - the forces generated by the action of the laser beam being practically nonexistent.

On the other hand, the action of the laser does create smoke, which may interfere with the correct operation of the device by absorbing part of the energy of the laser beam 2 and therefore rendering it less efficient; moreover, the carbonaceous residues of the smoke could foul the surface 6A of the mirror and so reduce its reflective capacity.

To avoid this problem, the device includes in the rear surface of the body of the mirror 6 an annular chamber 20 into which compressed air is injected via a line 21. This air then escapes through a shaped slit 22, by which it is distributed circumferentially, in order uniformly to strike the button 9 surfaces struck by the machining laser beam.

The mixture of air and smoke is then sucked out through a circumferential slit 23 formed between the interior of the tube 5 and the exterior of a sleeve 24, which latter is shaped to connect the circumferentially collected flow into a large radial suction tube 26.

Because of the presence of the slit 23, a stream of smoke-laden air is set up mostly against the internal walls of the tube 5 so that the laser beam can reach the surface of the button with less loss of energy. The stream of air injected through the shaped slit 22 also enables the smoke to strike the surface 6A of the mirror as little as possible and thus preserves its specular efficiency for a long period.

As can be seen in the drawing, the shaped slit 22 is formed in conjunction with an external annular diaphragm 25.

## Claims

1. Method for the ornamental machining and/or marking of buttons or other similar round objects by laser, characterized in that a button (9) is struck by a laser beam (2), e.g. from a carbon dioxide laser, having the infinite operating directions of the radii (7) of a hemisphere (10) in order to be able to strike both a front or plane surface of the said round object (9A) and the cylindrical or curved directrices (8) of the circular rim of the round object (9) being machined, the said operational possibility resulting from the use of the direct directions of the laser source (1) and also the indirect directions created by the reflection of the beam (2) from an annular mirror (6) external to and concentric with the button (9), with an essentially frustoconical effective surface (6A) forming an angle of approximately 45° relative to a central axis (4) perpendicular to the plane (9A) of the round object, the said round object being positioned on a service turntable (16) which cyclically presents the next round object (9) to the laser beam (2) after the support (5) of the annular mirror (6) has been drawn axially (4) back.

2. Device for the ornamental machining and/or marking of buttons by laser for carrying out the method according to Claim 1, characterized in that the button (9) is struck by a laser beam (2), e.g. from a carbon dioxide laser, having the infinite operating directions of the radii (7) of a hemisphere (10) in order to be able to strike both a front or plane surface of the button (9A) and the cylindrical or curved directrices (8) of the circular rim of the button (9) being machined, the said operational possibility resulting from the use of the direct directions of the laser source (1) and also the indirect directions created by the reflection of the beam (2) from an annular mirror (6) external to and concentric with the button (9), with an essentially frustoconical reflective surface (6A) forming an angle of approximately 45° relative to a central axis (4) perpendicular to the plane (9A) of the button, the button being positioned on a service turntable (16) which cyclically presents the next button (9) to the laser beam (2) after the support (5) of the annular mirror (6) has been drawn axially (4) back.

3. Device according to Claim 2, characterized by an axial drawing back of the support (5) of the annular mirror (6) effected by known means which may for example be a pneumatic cylinder (15).

4. Device according to Claim 2, characterized by equipment for removing the smoke of combustion generated by the action of the laser in order to prevent the deposition of particles of dirt on the reflective surface (6A) of the mirror, the said equipment comprising an annular chamber (20) located behind the reflective surface (6A), into which compressed air is injected via a line (21) so as to blow it through a shaped circular slit (22) and strike those parts of the button that are subject to the action of the laser beam so as to carry away the smoke produced therefrom, which smoke together with the abovementioned stream of air then becomes subject to the suction action of a circumferential slit (23) external to the cone of action of the laser beam (2) and defined by a sleeve (24) which is shaped such as to distribute around this slit (23) the suction action created by a radial line (26) connected to conventional suction means.

5. Device according to Claim 2, characterized by an annular mirror (6) held against an external annular diaphragm (25) by the action of a sleeve (11) screwed onto a support (12) which supports the whole.

6. Round objects whose surfaces are treated by laser etching using the method and/or device of the preceding claims, the continuity of which etching requires action by the laser beam (2) in radial directions (7) performed with continuity in a hemispherical spatial environment (10).
